# FASCICULE DE BREVET EUROPEEN

(11) **EP 2 707 578 B1**
(45) Date de publication et mention de la délivrance du brevet: **07.03.2018**
(21) Numéro de dépôt: 12728658.1
(22) Date de dépôt: 11.05.2012
(51) Int. Cl.: F01D 5/28, B29C 70/24, B29D 99/00

(54) **AUBE DE TURBOMACHINE COMPOSITE AVEC PIED INTEGRE**
TURBOMASCHINEN-VERBUNDSCHAUFEL MIT INTEGRIERTEM FUSS
COMPOSITE TURBOMACHINE BLADE WITH IN-BUILT ROOT

(30) Priorité: 13.05.2011 FR 1154162
(43) Date de publication de la demande: 19.03.2014
(73) Titulaire: Safran Aircraft Engines, 75015 Paris (FR)
(72) Inventeur: MATEO, Julien, F-33360 Carignan De Bordeaux (FR); ROUSSILLE, Clément, F-33200 Bordeaux (FR); MARSAL, David, F-33160 Saint Aubin De Medoc (FR); ANSORENA, Gilles, F-33160 Saint Aubin De Medoc (FR); HERRAIZ, Ivan, F-64000 Pau (FR)
(74) Mandataire: Desormiere, Pierre-Louis
(86) Numéro de dépôt international: PCT/FR2012/051047
(87) Numéro de publication internationale: WO 2012/156625

(56) Documents cités:
- FR-A1- 2 939 129
- US-A- 5 375 978

## Description

### Arrière-plan de l'invention

L'invention concerne des aubes de turbomachine en matériau composite comportant un renfort fibreux densifié par une matrice.

Le domaine visé est celui d'aubes de turbines à gaz pour moteurs aéronautiques ou turbines industrielles.

La réalisation d'aubes en matériau composite pour des turbomachines a déjà été proposée. On se référera notamment à la demande de brevet international WO 2010/061140 déposée conjointement par Snecma et Snecma Propulsion Solide. Cette demande décrit la fabrication d'une aube de turbomachine en matériau composite comprenant un renfort fibreux densifié par une matrice. De façon plus précise, ce procédé présente la particularité que l'ébauche fibreuse réalisée par tissage multicouche intègre deux textures qui se croisent pour former, après mise en forme, une préforme fibreuse en une seule pièce ayant une première partie formant préforme de pale et pied d'aube et au moins une deuxième partie formant préforme de plateforme ou talon d'aube. Ainsi, après densification de la préforme, il est possible d'obtenir une aube en matériau composite ayant un renfort fibreux constitué par la préforme et densifié par la matrice, et formant une seule pièce avec plateforme et/ou talon intégrés.

Dans ce cas, la préforme de pied d'aube est réalisée en utilisant un insert afin de former une portion en forme de bulbe au niveau de la partie de l'aube correspondant à son pied.

Cependant, cette technique de formation de pied d'aube complexifie la fabrication industrielle de l'aube et augmente son coût de fabrication car elle engendre des pertes de matière importantes et demande des manipulations délicates qui ralentissent la vitesse de production.

### Objet et résumé de l'invention

Il est donc souhaitable de pouvoir disposer d'aubes de turbomachine en matériau composite, notamment mais non nécessairement en matériau composite thermostructural tel qu'en CMC, pour des turbines ou compresseurs de turbomachines, aubes qui sont relativement simples à fabriquer tout en présentant une très bonne tenue mécanique.

A cet effet, selon la présente invention, il est proposé, selon la revendication 1, un procédé de fabrication d'une aube de turbomachine en matériau composite comprenant un renfort fibreux densifié par une matrice, le procédé comprenant :
- la réalisation par tissage multicouche d'une ébauche fibreuse en une seule pièce comprenant, dans la direction longitudinale de ladite ébauche fibreuse correspondant à la direction longitudinale de l'aube à fabriquer, un premier ensemble de plusieurs couches de fils qui sont liées entre elles pour former une première partie de l'ébauche correspondant à une préforme de pale et un deuxième ensemble d'une ou plusieurs couches de fils qui sont liées entre elles au moins localement pour former au moins une deuxième partie de l'ébauche correspondant à une préforme de pied d'aube, les fils du premier ensemble de couches de fils n'étant pas liés aux fils du deuxième ensemble de couches de fils, le premier ensemble de couches de fils étant traversé par des fils du deuxième ensemble de couches de fils au niveau de la deuxième partie de l'ébauche,
- la mise en forme de l'ébauche fibreuse pour obtenir une préforme fibreuse en une seule pièce ayant ladite première partie formant préforme de pale et au moins ladite deuxième partie formant préforme de pied d'aube, et
- la densification de la préforme par une matrice pour obtenir une aube en matériau composite ayant un renfort fibreux constitué par la préforme et densifié par la matrice, et formant une seule pièce avec pied d'aube intégré.

Par rapport aux procédés de l'art antérieur, l'invention prévoit de réaliser un pied d'aube intégré à la structure de pale de l'aube en croisant deux ensembles de couche de fils dans l'ébauche fibreuse au niveau de la partie de celle-ci destinée à former le pied d'aube. Ainsi, il est possible de créer dans l'ébauche fibreuse une zone de surépaisseur et de disposer d'une réserve de matière suffisante pour former une préforme de pied d'aube qui permet d'éviter l'utilisation d'un insert comme dans l'art antérieur.

En outre, les fils de la partie du renfort fibreux du pied d'aube qui est soumise aux efforts mécaniques les plus importants, à savoir les parties latérales du pied qui font saillie sur de chaque côté de l'aube et qui assurent la retenue du pied d'aube dans son logement vis-à-vis des forces centrifuges, sont croisés avec les fils de l'autre partie du renfort fibreux constituant la pale de l'aube. Par ce croisement de textures, on obtient ainsi une très bonne tenue mécanique au point de contrainte le plus important de l'aube.

En dehors de ce croisement, l'aménagement de zones de déliaison entre les premier et deuxième ensembles de couches de fils permet une mise en forme de la préforme fibreuse sans coupe de fils de liage, une telle coupe pouvant amoindrir la tenue mécanique du renfort fibreux, donc de l'aube fabriquée.

Selon une autre particularité du procédé, l'ébauche fibreuse est tissée avec un deuxième ensemble continu de couches de fils et la mise en forme de l'ébauche fibreuse comprend l'élimination par découpe de parties du deuxième ensemble de couches de fils extérieures à la deuxième partie de l'ébauche fibreuse.

Selon encore une autre particularité du procédé, celui-ci comprend l'usinage de ladite deuxième partie à la forme du pied d'aube à réaliser, l'usinage étant réalisé après la densification de la préforme. Selon une variante de mise en oeuvre du procédé, la densification de la préforme est réalisée en deux étapes successives. Dans ce cas, un premier usinage peut être réalisé après la première étape de densification et être complété par un deuxième usinage réalisé après la deuxième étape de densification.

Selon une autre particularité du procédé de l'invention, l'ébauche fibreuse comprend en outre au moins une troisième partie formant tout ou partie d'un des éléments suivants :
- plateforme d'aube avec ou sans becquet et avec ou sans muret anti-basculement,
- talon d'aube avec ou sans becquets de talon d'aube et avec ou sans léchettes de talon d'aube,
la mise en forme de l'ébauche fibreuse comprenant la mise en forme de la troisième partie de l'ébauche fibreuse pour obtenir une préforme fibreuse en une seule pièce ayant en outre ladite troisième partie, l'aube obtenue après densification de la préforme par une matrice formant une seule pièce avec pied d'aube intégré et avec tout ou partie intégrée d'un élément des éléments suivants :
- plateforme d'aube avec ou sans becquets et avec ou sans muret anti-basculement,
- talon d'aube avec ou sans becquets de talon d'aube et avec ou sans léchettes de talon d'aube.

La troisième partie peut être formée par le deuxième ensemble de plusieurs couches de fils, le premier ensemble de couches de fils étant traversé une nouvelle fois par des fils du deuxième ensemble de couches de fils au niveau de la troisième partie de l'ébauche.

Selon encore une autre particularité du présent procédé, le nombre de couches de fils dans le deuxième ensemble de couches de fils est plus important dans la deuxième partie de l'ébauche fibreuse que dans la troisième partie.

Selon toujours une autre particularité du présent procédé, le titre des fils dans le deuxième ensemble de couches de fils est plus important dans la deuxième partie de l'ébauche fibreuse que dans la troisième partie.

Selon une variante, la troisième partie correspond à une texture fibreuse rapportée sur la première partie de l'ébauche fibreuse.

L'invention propose en outre une aube de turbomachine en matériau composite selon la revendication 10 comprenant un renfort fibreux obtenu par tissage multicouche de fils et densifié par une matrice, l'aube comprenant une première partie constitutive de pale formant une seule pièce avec au moins une deuxième partie constitutive d'un pied d'aube, les parties de renfort fibreux correspondant à la première et à la deuxième parties de l'aube sont au moins en partie mutuellement imbriquées, avec des fils de la première partie de renfort fibreux pénétrant dans la deuxième partie de renfort fibreux.

Selon un aspect particulier de l'aube, celle-ci comprend en outre au moins une troisième partie formant tout ou partie d'un des éléments suivants :
- plateforme d'aube avec ou sans becquets et avec ou sans muret anti-basculement,
- talon d'aube avec ou sans becquets de talon d'aube et avec ou sans léchettes de talon d'aube.

Selon une particularité de l'aube, les parties de renfort fibreux correspondant à la première et à la troisième partie de l'aube sont au moins en partie mutuellement imbriquées, avec des fils de la troisième partie de renfort fibreux pénétrant dans la deuxième partie de renfort fibreux.

L'aube peut être en un matériau composite à matrice céramique.

L'invention vise aussi un rotor ou disque de compresseur équipé d'une pluralité d'aubes telles que définies ci-avant. L'invention vise encore un compresseur équipé d'un tel rotor et une turbomachine comprenant un tel compresseur.

### Brève description des dessins

L'invention sera mieux comprise à la description faite ci-après, à titre indicatif mais non limitatif, en référence aux dessins annexés sur lesquels :
- la figure 1 est une vue en perspective d'une aube de roue mobile conformément à un mode de réalisation de l'invention ;
- la figure 2 illustre de façon très schématique la disposition de deux ensembles de couches de fils dans une ébauche fibreuse tissée multicouche destinée à la réalisation d'une préforme fibreuse pour une aube telle que celle illustrée par la figure 1 ;
- les figures 3 à 5 illustrent des étapes successives de réalisation d'une préforme fibreuse pour une aube telle qu'illustrée par la figure 1, à partir de l'ébauche fibreuse de la figure 2 ;
- la figure 6A est une vue partielle en coupe chaîne dans une partie de l'ébauche fibreuse de la figure 2 correspondant à l'emplacement de jonction entre pale et pied d'aube ;
- la figure 6B est une vue partielle en coupe trame dans une partie de l'ébauche fibreuse de la figure 2 correspondant à l'emplacement de jonction entre pale et pied d'aube ;
- la figure 7A est une vue partielle en coupe chaîne dans une partie de l'ébauche fibreuse de la figure 2 correspondant à l'emplacement de jonction entre pale et talon d'aube ;
- la figure 7B est une vue partielle en coupe trame dans une partie de l'ébauche fibreuse de la figure 2 correspondant à l'emplacement de jonction entre pale et talon d'aube ;
- la figure 8A est une vue en coupe trame montrant un exemple de disposition de fils de trame dans une partie d'ébauche fibreuse correspondant à une partie de pied de pale ;
- les figures 8B à 8D sont des vues en coupe trame montrant des plans de chaîne pour un exemple de tissage multicouche dans la partie d'ébauche fibreuse de la figure 8A ;
- les figures 9 et 10 illustrent très schématiquement des variantes de réalisation de pied d'aube.

### Description détaillée de modes de réalisation

L'invention est applicable à différents types d'aubes de turbomachine comprenant, conformément à l'invention, au moins un pied intégré à la structure de pale. Les aubes concernées sont notamment des aubes de compresseur et de turbine de différents corps de turbines à gaz et peuvent intégrer en outre d'autres éléments telles que notamment une plateforme d'aube éventuellement munie d'un muret anti-basculement et/ou de becquets, ou un talon d'aube éventuellement muni de becquets et/ou des léchettes. Toutefois, l'invention s'applique également à des aubes à pied intégré sur lesquelles un ou plusieurs de ces éléments sont rapportés lors de la réalisation de la préforme fibreuse de l'aube, c'est-à-dire avant densification, ou après la densification.

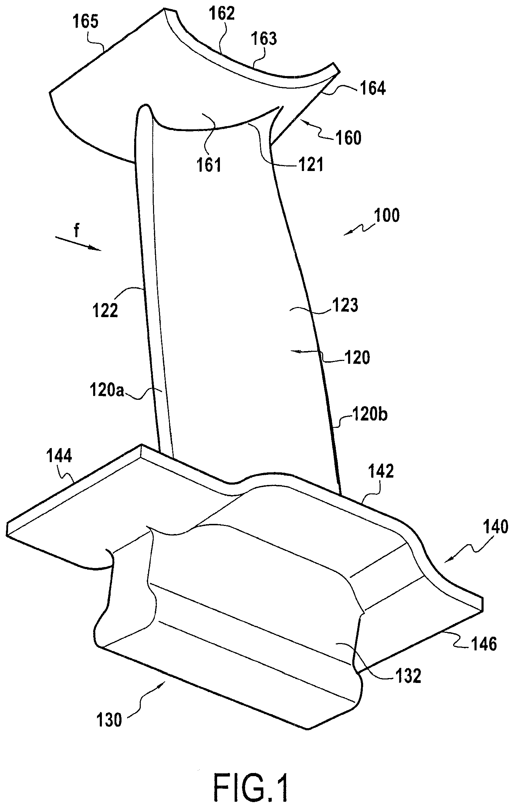

La figure 1 illustre une aube 100 de roue mobile de turbine basse pression (BP) qui comprend une pale 120 et un pied 130 formé par une partie de plus forte épaisseur, par exemple à section en forme de bulbe, prolongé par une échasse 132. La pale 120 s'étend en direction longitudinale entre son pied 130 et son sommet 121 et présente en section transversale un profil incurvé d'épaisseur variable délimitant deux faces 122 et 123, correspondant respectivement à l'extrados et à l'intrados de la pale 120 et reliant chacune le bord d'attaque 120a et le bord de fuite 120b de cette dernière.

L'aube 100 est montée sur un rotor de turbine (non illustré) par engagement du pied 130 dans un logement de forme correspondante aménagé à la périphérie du rotor.

Dans l'exemple décrit ici, la pale 120 comprend en outre une plateforme d'aube 140 et un talon d'aube 160.

Plus précisément, à son extrémité radiale interne, la pale 120 se raccorde à la plateforme d'aube 140 dont la face externe (ou supérieure) 142 délimite, radialement à l'intérieur, la veine d'écoulement d'un flux gazeux f. Dans ses parties d'extrémité amont et aval (dans le sens f d'écoulement du flux gazeux), la plateforme 140 se termine par des becquets de recouvrement 144 et 146.

Dans l'exemple illustré, la face 142 de la plateforme est sensiblement perpendiculaire à la direction longitudinale de l'aube. Selon le profil souhaité de la surface intérieure de la veine d'écoulement de flux gazeux, la face 142 de la plateforme peut être également inclinée en formant globalement un angle non nul par rapport à la normale à la direction longitudinale de l'aube, et/ou la face 142 pourrait avoir un profil globalement non rectiligne, par exemple incurvé.

La pale 120 se raccorde en outre à son extrémité radiale externe à un talon d'aube 160 qui délimite sur sa face interne (inférieure) 161, radialement à l'extérieur, la veine d'écoulement du flux gazeux f. Sur sa face externe (supérieure) 162, le talon d'aube 160 délimite une dépression ou baignoire 163. Le long des bords amont et aval de la baignoire 163, le talon 160 porte des léchettes 164 et 165 à profil en forme de dents dont les extrémités peuvent pénétrer dans une couche de matériau abradable d'un anneau de turbine (non représenté) pour réduire le jeu entre le sommet d'aube et l'anneau de turbine. Dans l'exemple illustré, la face 161 du talon d'aube 60 présente un profil incurvé formant globalement un angle non nul par rapport à la normale à la direction longitudinale de l'aube. En variante, selon le profil souhaité de la surface extérieure de la veine d'écoulement de flux gazeux, la face 161 pourrait avoir un profil globalement rectiligne et/ou s'étendre sensiblement perpendiculairement à la direction longitudinale de l'aube.

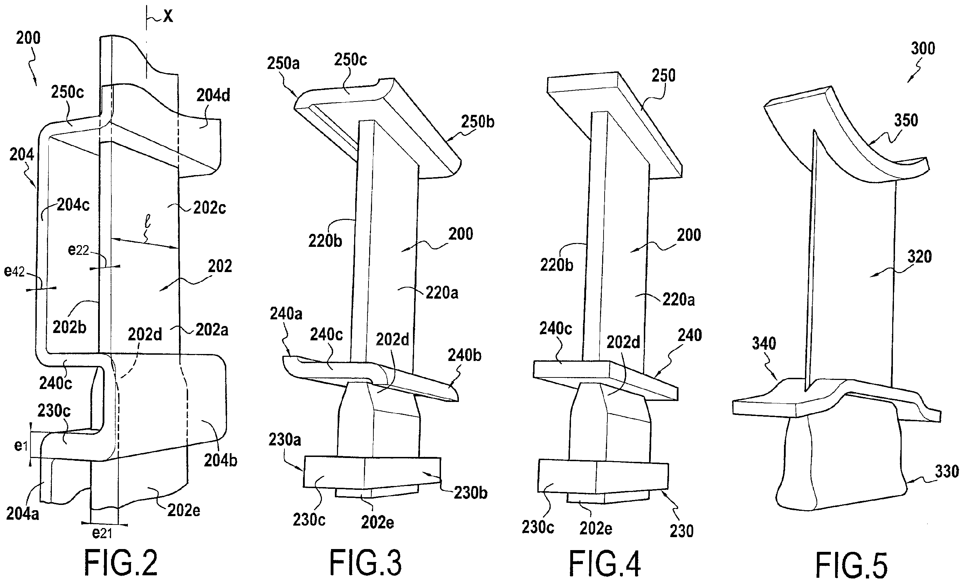

La figure 2 montre très schématiquement une ébauche fibreuse 200 à partir de laquelle une préforme fibreuse d'aube peut être mise en forme afin, après densification par une matrice et usinage éventuel, d'obtenir une aube en matériau composite à pied, plateforme et talon intégrés telle que l'aube 100 illustrée par la figure 1.

L'ébauche 200 comprend deux bandes fibreuses 202, 204 obtenues par tissage tridimensionnel ou tissage multicouche, seules les enveloppes de ces deux parties étant représentées sur la figure 1. Pour plus de clarté de la figure 2, les bandes 202 et 204 sont représentées en étant espacées l'une de l'autre. Toutefois dans la réalisé, la bande 204 est tissée au plus près de la bande 202.

La bande fibreuse 202 comprend une première partie 202c destinée, après mise en forme, à constituer une partie de préforme fibreuse d'aube correspondant à une préforme de pale, cette partie présentant une face 202a destinée à former le côté intrados de la pale et une face 202b destinée à former le côté extrados de la pale. La bande 202 comprend en outre une troisième partie de surépaisseur 202e destinée à constituer une partie de préforme de pied d'aube et reliée à la première partie 202c par une deuxième partie 202d d'épaisseur décroissante et destinée à constituer une préforme d'échasse d'aube.

La bande fibreuse 204 est destinée, après mise en forme, à constituer les parties de préforme fibreuse d'aube correspondant à des préformes de pied, de plateforme et de plateau de becquets de talon d'aube.

Les deux bandes 202, 204 s'étendent de façon générale dans une direction X correspondant à la direction longitudinale de l'aube à réaliser. La bande fibreuse 202 présente, dans sa partie de surépaisseur 202e destinée à former une préforme de pied d'aube, une épaisseur e₂₁, par exemple d'environ 5 à 6 mm, et, dans sa partie 202c destinée à former une préforme de pale, une épaisseur e₂₂ inférieure à l'épaisseur e₂₁, par exemple d'environ 3 mm en moyenne. L'épaisseur e22 peut être variable suivant la longueur de la partie destinée à former une préforme de pale en fonction de l'épaisseur de profil de la pale de l'aube à réaliser.

La bande fibreuse 204 présente, dans sa partie destinée à former une partie de préforme de pied d'aube correspondant à la partie de raccordement 230c décrite ci-après, une épaisseur e₄₁, par exemple d'environ 4 à 5 mm, et, dans ses autres parties correspondant notamment aux parties de raccordement 240c et 250c décrites ci-après, une épaisseur e42 inférieure à l'épaisseur e₄₁ par exemple d'environ 3 mm.

La bande fibreuse 202 a une largeur l choisie en fonction de la longueur du profil développé (à plat) de la pale de l'aube à réaliser tandis que la bande fibreuse 204 a une largeur L supérieure à l choisie en fonction des longueurs développées de la plateforme et du plateau de becquet de talon de l'aube à réaliser.

La bande 204 comprend une première partie 204a et une troisième partie 204c qui s'étendent le long et au voisinage la deuxième face 202b (extrados) de la bande 202 et une deuxième partie 204b et une quatrième partie 204d qui s'étendent le long et au voisinage de la première face 202a (intrados) de de la bande 202.

Les parties 204a et 204b se raccordent par une partie de raccordement 230c qui s'étend transversalement par rapport à la bande 202 à un emplacement correspondant à celui du pied de l'aube à réaliser. La partie de raccordement 230c traverse la bande sensiblement perpendiculairement à la direction longitudinale de l'ébauche fibreuse.

Les parties 204b et 204c se raccordent par une partie de raccordement 240c qui s'étend transversalement par rapport à la bande 202 à un emplacement correspondant à celui de la plateforme de l'aube à réaliser. La partie de raccordement 240c traverse la bande sensiblement perpendiculairement à la direction longitudinale de l'ébauche fibreuse.

Les parties 204c et 204d se raccordent par une partie de raccordement 250c qui s'étend transversalement par rapport à la bande 202 suivant un profil ondulé à un emplacement correspondant à celui du talon d'aube à réaliser.

Comme indiqué ci-avant, selon la géométrie souhaitée au niveau du pied, plateforme et talon de l'aube, une ou plusieurs des parties de raccordement 230c, 240c et 250c pourront traverser la bande 202 perpendiculairement ou en formant un angle non nul par rapport à la normale à la direction longitudinale X de l'ébauche et/ou présenter un profil rectiligne ou curviligne.

Comme décrit plus en détail plus loin, les bandes 202 et 204 sont tissées simultanément par tissage multicouche, sans liaison entre la bande 202 et les parties 204a, 204b, 204c et 204d de la bande 204 et en tissant une pluralité d'ébauches 200 successives de façon continue dans la direction X.

Les surépaisseurs e₂₁ et e₄₁ respectivement des bandes 202 et 204 peuvent être obtenues notamment en utilisant dans ces zones des fils de titre plus important et/ou en augmentant le nombre de couche de fils de trame ou de chaîne.

Les figures 3 à 5 montrent très schématiquement comment une préforme fibreuse ayant une forme proche de celle de l'aube à fabriquer peut être obtenue à partir de l'ébauche fibreuse 200.

La bande fibreuse 202 est coupée à une extrémité dans sa partie de surépaisseur 202e en-dessous de la partie de raccordement 230c et à une autre extrémité un peu au-delà de la partie de raccordement 250c pour avoir une bande 220 de longueur correspondant à la dimension longitudinale de l'aube à fabriquer avec une partie renflée 230 formée par une partie de la surépaisseur 202e et située à un emplacement correspondant à la position du pied de l'aube à fabriquer. La bande 220 présentant une face 220a destinée à former le côté intrados de la pale et une face 220b destinée à former le côté extrados de la pale.

En outre, des découpes sont pratiquées aux extrémités des parties 204a et 204d de la bande 204 et dans les partie 204b et 204c de celle-ci pour laisser subsister des tronçons 230a et 230b de part et d'autre de la partie de raccordement 230c, des tronçons 240a et 240b de part et d'autre de la partie de raccordement 240c, et des tronçons 250a et 250b de part et d'autre de la partie de raccordement 250c, comme le montre la figure 3. Les longueurs des tronçons 230a, 230b, 240a, 240b, 250a et 250b sont déterminées en fonction des largeurs de pied, de plateforme et de talon dans l'aube à fabriquer.

Du fait de la déliaison entre la bande 202 de l'ébauche fibreuse, d'une part, et les parties 204a, 204b, 204c et 204d, d'autre part, les tronçons 230a, 230b, 240a, 240b, 250a et 250b peuvent être rabattus perpendiculairement à la bande 220 sans couper de fils pour former des plateaux 230, 240 et 250 comme montrés par la figure 4.

Une préforme fibreuse 300 de l'aube à fabriquer est ensuite obtenue par moulage avec déformation de la bande 220 pour reproduire le profil incurvé de la pale de l'aube et déformation des plateaux 240 et 250 pour reproduire une forme semblable respectivement à celle de la plateforme de l'aube et du talon d'aube, comme le montre la figure 5. Après densification, la préforme 300 est usinée pour donner au plateau 250 une forme semblable à celle du pied d'aube à réaliser. On obtient ainsi une préforme 300 avec une partie 320 de préforme de pale, une partie 330 de préforme de pied (avec préforme d'échasse), une partie 340 de préforme de plateforme et une partie 350 de préforme de talon d'aube.

Le tissage de l'ébauche fibreuse 200 est réalisé avec des fils de chaîne s'étendant dans la direction longitudinale X de l'ébauche, étant noté qu'un tissage avec des fils de trame dans cette direction est également possible.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

Bien entendu, selon les titres de fils disponibles, différentes combinaisons de nombres de couches de fils et de variations de contexture et de titre pourront être adoptées pour le profil à obtenir.

Pour le tissage de l'ébauche fibreuse 200, le tissage utilisée peut être par exemple un tissage multicouche réalisé avec une armure de type satin, ou multi-satin. D'autres types de tissage multicouche pourront être utilisés, par exemple un tissage multicouche à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage multicouche sont notamment décrits dans le document WO 2006/136755.

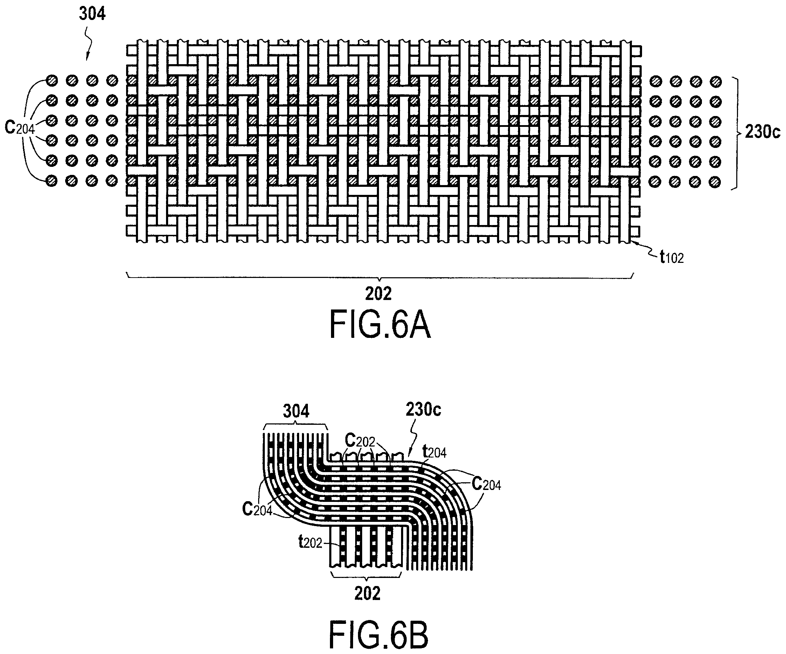

La figure 6A est une vue en coupe chaîne au niveau de la traversée de la bande 202 par la partie de raccordement 230ç de la bande 204 de l'ébauche fibreuse de la figure 2, les fils de chaîne de cette partie de raccordement étant vus en coupe. Chaque couche de fils de chaîne C₂₀₄ de la bande 204 s'étend, dans cette partie de raccordement 230c, dans une direction perpendiculaire à la direction trame t₂₀₂ de la bande 202. Le passage de la bande 204 d'un côté à l'autre de la bande 202 est réalisé, lors du tissage, en faisant traverser l'ensemble des fils de chaîne et de trame de la bande 202 par chaque fil de chaîne de la bande 204, individuellement.

La figure 6B est une vue en coupe trame des fils de trame t₂₀₂ et t₂₀₄ respectivement des bandes 202 et 204 au niveau de la traversée de la bande 202 par la partie de raccordement 230c de la bande 204 de l'ébauche fibreuse de la figure 2. Dans l'exemple illustré, comme déjà indiqué, la partie de raccordement 230c s'étend perpendiculairement à la direction des couches de fils de chaîne C₂₀₂ de la bande 202.

Les vues en coupe chaîne et trame au niveau de la traversée de la bande 202 par la partie de raccordement 240c de la bande 204 de l'ébauche fibreuse de la figure 2 sont similaires à celle présentées sur les figures 6A et 6B avec un nombre moins important de couches de chaîne C₂₀₂ et C₂₀₄ respectivement dans les bandes 202 et 204 en raison de la différence d'épaisseur entre les bandes 202 et 204 au niveau des parties de raccordement 230c et 240c.

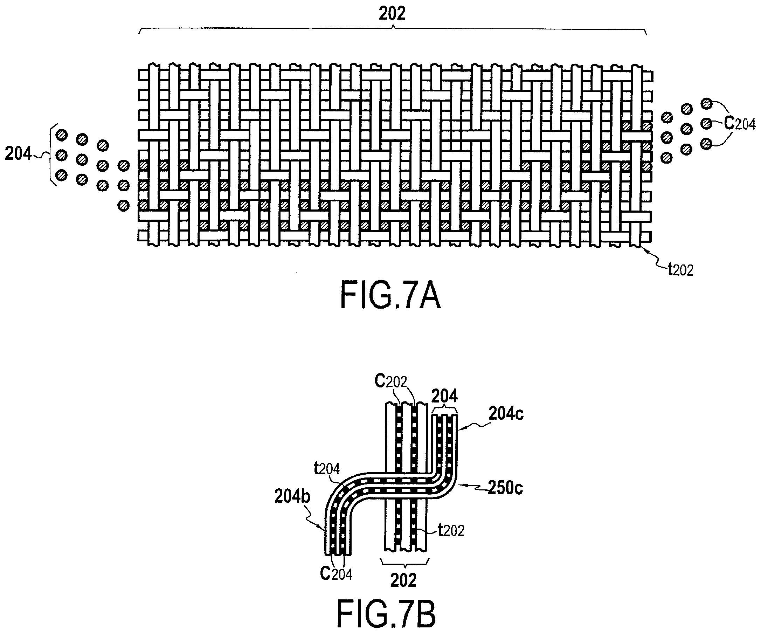

La figure 7A est une vue en coupe chaîne au niveau de la traversée de la bande 202 par la partie de raccordement 250c de la bande 204 de l'ébauche fibreuse de la figure 2. Dans cette partie, les couches de fils de chaîne C₂₀₄ de la bande 204 pénètre entre des fils de trame t₂₀₂ de la bande 202 suivant un profil incurvé tel que représenté sur la figure 7A. Bien entendu, suivant la forme de de talon d'aube désirée, les couches de fils de chaîne C₂₀₄ de la bande 204 peuvent entrer et sortir de la bande 202 avec des profils de formes différentes comme des profils rectilignes par exemple.

La figure 7B est une vue en coupe trame des fils de trame t₂₀₂ et t₂₀₄ respectivement des bandes 202 et 204 au niveau de la traversée de la bande 202 par la partie de raccordement 250c de la bande 204. Dans l'exemple illustré, comme déjà indiqué, la partie de raccordement 250c s'étend perpendiculairement à la direction des couches de fils de chaîne C₂₀₂ de la bande 202.

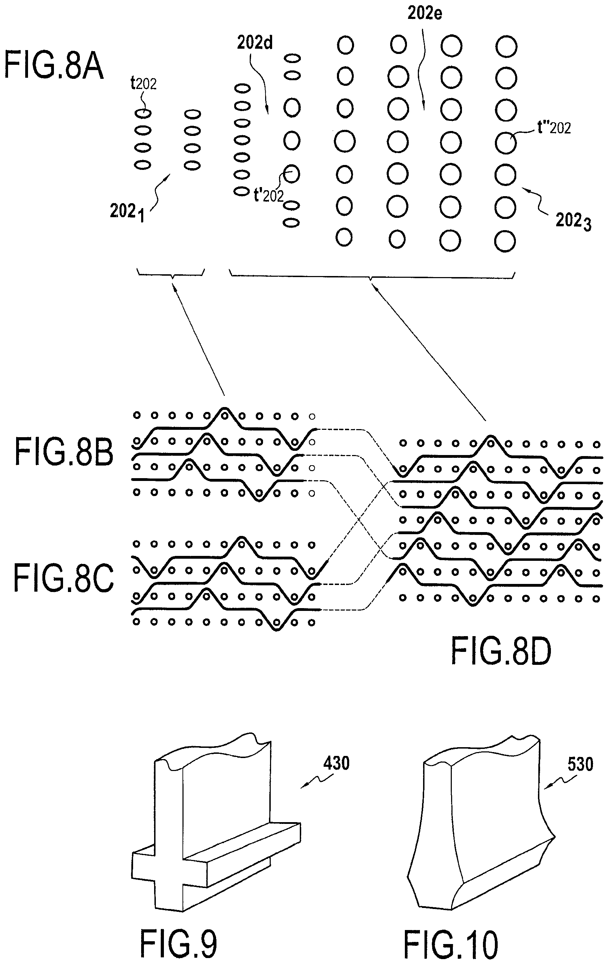

La partie de surépaisseur 202e de la bande fibreuse 202 ainsi que la surépaisseur présente dans la partie de raccordement 230c de la bande 204 peuvent être obtenues en utilisant des fils de trame de plus gros titre et des couches supplémentaires de fils de trame, comme le montre par exemple la figure 8A pour la partie de surépaisseur 202e.

Sur la figure 8A, le nombre de couches de fils de trame passe dans cet exemple de 4 à 7 entre une partie 202₁ correspondant à la partie 202d d'épaisseur décroissante destinée à constituer une préforme d'échasse d'aube et une partie 202₃ correspondant à la partie de surépaisseur 202e de la bande 202 destinée à former une partie de préforme de pied d'aube.

En outre, des fils de trame t₂₀₂, t'₂₀₂, t"₂₀₂ de titres différents sont utilisés, les fils t₂₀₂ étant par exemple des fils de SiC "Nicalon" de titre 0,5K (500 filaments), les fils t'₂₀₂ étant obtenus par la réunion de 2 fils de 0,5K et les fils t"₂₀₂ par la réunion de 3 fils de 0,5K.

Le tissage dans la partie d'ébauche 202₃ nécessite des couches de fils de chaîne en plus grand nombre que dans la partie 202₁. Cela est avantageusement réalisé lors de la transition entre la partie 202₁ et la partie 202₃ en diminuant le nombre de plans de chaîne en constituant chaque plan de chaîne dans la partie 202₃ par la réunion des fils de chaîne de deux plans de chaîne de la partie 202₁. Les figures 8B et 8C montrent deux plans de chaîne voisins dans la partie 202₁ et la figure 8D montre un plan de chaîne obtenu dans la partie 202₃ par la réunion des plans de chaîne des figures 8B et 8C. Sur les figures 8B, 8C et 8D, on n'a pas montré les titres différents des fils de chaîne ou des fils de trame (comme montré sur la figure 8A) par souci de simplicité. Entre les figures 8B, 8C, d'une part, et la figure 8D, d'autre part, les tirets montrent comment les fils de chaîne des différentes couches dans les figures 8B, 8C forment les couches de fils de chaîne de la figure 8D.

Bien entendu, différentes combinaisons de nombres de couches de trame et de titres de fils de trame pourront être adoptées pour former les surépaisseurs présentes dans la partie 202e de la bande fibreuse 202 et dans la partie de raccordement 230c de la bande 204.

On décrit maintenant des étapes successives qui peuvent être mise en oeuvre pour réaliser la mise en forme de l'ébauche fibreuse d'un élément de talon d'aube ou d'une aube de l'invention et la densification de cette préforme.

Comme décrit ci-avant, une ébauche fibreuse destinée à former le renfort fibreux d'un élément de talon d'aube ou d'aube est tissée par tissage multicouche, ou par empilement de structures fibreuses. Pour des aubes de turbomachine destinées à une utilisation à température élevée et notamment en environnement corrosif (notamment humidité), on utilise pour le tissage des fils formés de fibres en céramique, notamment des fibres de carbure de silicium (SiC). Pour des températures moins élevées, des fibres de carbone peuvent être également utilisées.

La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine, éventuellement dilué dans un solvant. La préforme est placée dans un moule pouvant être fermé de manière étanche avec un logement ayant la forme de la pièce finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant à la structure à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

La matrice peut être notamment obtenue à partir de résines époxydes, telle que, par exemple, la résine époxyde à hautes performances, ou de précurseurs liquides de matrices carbone ou céramique.

Dans l'exemple décrit ici, l'ébauche fibreuse est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine, une pré-réticulation de la résine peut être effectuée. La pré-réticulation, ou réticulation incomplète permet d'accroître la raideur, donc la tenue, tout en préservant la capacité de déformation nécessaire pour la réalisation de préformes d'élément de talon d'aube ou d'aubes.

L'ébauche fibreuse, en particulier celle destinée à former l'aube est découpée, comme illustré par la figure 3.

L'ébauche est ensuite mise en forme (comme illustré par la figure 5) et placée dans un moule par exemple en graphite pour conformation des plateaux de becquets et de léchettes de talon d'aube dans le cas de l'élément de talon d'aube et de de la partie de préforme de pale, pied et préforme d'aube dans le cas de l'aube.

Ensuite, la réticulation de la résine est achevée et la résine réticulée est pyrolysée. La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Une densification par une matrice de la préforme consolidée est ensuite réalisée. Pour une aube de turbomachine destinée à une utilisation à température élevée, et notamment en milieu corrosif, la matrice est en céramique, par exemple en SiC. On peut réaliser la densification par CVI, auquel cas la formation de la deuxième couche d'interphase et la densification par la matrice peuvent être enchaînées dans un même four.

La densification peut être réalisée en deux étapes successives séparées par une étape d'usinage de l'élément de talon d'aube ou de l'aube aux dimensions désirées.

On notera qu'un pré-usinage peut être réalisé après réticulation et avant pyrolyse de la résine.

Selon une variante de mise en oeuvre, la préforme peut être consolidée par densification partielle en étant maintenue dans le conformateur, la consolidation étant réalisée par formation de dépôt céramique sur les fibres par CVI.

Le conformateur est de préférence en graphite et présente des trous facilitant le passage des phases gazeuses réactionnelles donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives séparées par une étape d'usinage de l'élément de talon d'aube ou de l'aube aux dimensions désirées.

Dans ce qui précède, on a envisagé la réalisation d'un profil de pale à épaisseur variable par l'utilisation de fils de titre et/ou contexture variables. Il est possible, en variante, de réaliser la partie d'ébauche fibreuse correspondant à la partie de préforme de pale avec un certain nombre de couches de fils de même titre et avec contexture fixe, la variation d'épaisseur du profil étant réalisée lors de l'usinage après première étape de densification ou lors d'un pré-usinage de la préforme d'aube consolidée.

Par ailleurs, selon les conditions d'utilisation envisagées, les fibres du renfort fibreux de l'aube peuvent être en un matériau autre qu'une céramique, par exemple en carbone, et la matrice peut être en un matériau autre qu'une céramique, par exemple en carbone ou en une résine. L'aube selon l'invention peut être notamment réalisée en matériau composite à matrice céramique (CMC) qui est un matériau formé d'un renfort en fibres de carbone ou céramique densifié par une matrice au moins partiellement céramique tel qu'un matériau carbone-carbone/carbure de silicium (C-C/SiC), carbone-carbure de silicium (C/SiC), carbure de silicium-carbuire de silicium (SiC/SiC), ou en matériau composite carbone-carbone (C/C) qui, de façon connue, est un matériau formé d'un renfort en fibres de carbone densifié par une matrice en carbone.

L'invention est bien entendu applicable aussi à la fabrication d'aubes en matériau composite à matrice organique (CMO) telle que celle obtenue, par exemple, à partir d'une résine époxyde à hautes performances.

La forme finale du pied d'aube est usinée après densification de la préforme. Lorsque la densification est réalisée en deux fois, un premier usinage grossier de la préforme de pied d'aube est réalisé tandis qu'un deuxième usinage plus fin à la forme et aux dimensions finales du pied de l'aube à réaliser est effectuée après la deuxième densification de la préforme.

La forme du pied de l'aube de l'invention n'est pas limitée à une forme de bulbe comme illustrée sur la figure 1. En fonction de la forme du logement de rotor dans lequel le pied de l'aube doit être engagé et/ou de la répartition souhaitée des efforts exercés au niveau du pied d'aube, l'aube de l'invention peut présenter de nombreuses formes différentes comme notamment une forme rectangulaire ou de croix, comme le pied 430 de la figure 9 ou une forme sensiblement polygonale comme le pied 530 de la figure 10.

Par ailleurs, dans l'aube décrite ci-avant l'ébauche fibreuse correspond à une structure fibreuse tissée en une seule pièce qui intègre, en outre d'une première partie destinée à former la pale de l'aube, non seulement une deuxième partie destinée à former le pied d'aube conformément à l'invention mais aussi des troisième et quatrième parties destinées à former respectivement une plateforme et un talon d'aube, les deuxième, troisième et quatrième parties étant chacune imbriquées au moins partiellement avec la première partie (traversée d'au moins une partie de la première partie par des fils des deuxième, troisième et quatrième parties).

Toutefois, l'aube selon l'invention n'est pas limitée à une telle structure d'aube.

D'une manière générale, l'aube selon l'invention couvre tout type d'aube ayant une première partie constitutive de pale formant une seule pièce avec au moins une deuxième partie constitutive d'un pied d'aube, les parties de renfort fibreux correspondant à la première et à la deuxième partie de l'aube sont au moins en partie mutuellement imbriquées, avec des fils de la deuxième partie de renfort fibreux pénétrant dans la première partie de renfort fibreux, l'aube pouvant comprendre en outre au moins :
- une troisième partie formant tout ou partie d'un des éléments suivants :
   - plateforme d'aube avec ou sans becquets et avec ou sans muret anti-basculement,
   - talon d'aube avec ou sans becquets de talon d'aube et avec ou sans léchettes de talon d'aube,
   les parties de renfort fibreux correspondant à la première et à la troisième partie de l'aube sont au moins en partie mutuellement imbriquées, avec des fils de la troisième partie de renfort fibreux pénétrant dans la première partie de renfort fibreux tel que décrit dans les demandes de brevet français N°1055160 et N°1055161,
- une troisième partie formant tout ou partie d'un des éléments suivants :
   - plateforme d'aube avec ou sans becquets et avec ou sans muret anti-basculement,
   - talon d'aube avec ou sans becquets de talon d'aube et avec ou sans léchettes de talon d'aube,
   l'ébauche fibreuse correspondant à la troisième partie étant rapportée et fixée, par exemple par couture, sur l'ébauche fibreuse correspondant à la première partie constitutive de pale de l'aube,
- un élément de plateforme d'aube avec ou sans becquets et avec ou sans muret anti-basculement, l'élément de plateforme étant fabriqué indépendamment des première et deuxième parties mutuellement imbriqués et étant rapporté ensuite sur la pale de l'aube tel que décrit dans le demande de brevet internationale WO 2010/116066,
- un élément de talon d'aube avec ou sans becquets de talon d'aube et avec ou sans léchettes de talon d'aube, l'élément de talon d'aube étant fabriqué indépendamment des première et deuxième parties mutuellement imbriqués et étant rapporté ensuite sur la pale de l'aube tel que décrit dans le demande de brevet internationale WO 2010/116066.

## Revendications

1. Procédé de fabrication d'une aube (100) de turbomachine en matériau composite comprenant un renfort fibreux densifié par une matrice, le procédé comprenant :
- la réalisation par tissage multicouche d'une ébauche fibreuse 200) en une seule pièce comprenant, dans la direction longitudinale de ladite ébauche fibreuse correspondant à la direction longitudinale de l'aube à fabriquer, un premier ensemble (202) de plusieurs couches de fils qui sont liées entre elles pour former une première partie (202c) de l'ébauche correspondant à une préforme de pale (320) et un deuxième ensemble (204) d'une ou plusieurs couches de fils qui sont liées entre elles au moins localement pour former au moins une deuxième partie (230c) de l'ébauche (200) correspondant à une préforme de pied d'aube (330), les fils du premier ensemble (202) de couches de fils n'étant pas liés aux fils du deuxième ensemble (204) de couches de fils, le premier ensemble de couches de fils étant traversé par des fils du deuxième ensemble de couches de fils au niveau de la deuxième partie (230c) de l'ébauche (200),
- la mise en forme de l'ébauche fibreuse (200) pour obtenir une préforme fibreuse (300) en une seule pièce ayant ladite première partie formant préforme de pale (320) et au moins ladite deuxième partie formant préforme de pied d'aube (330), et
- la densification de la préforme (300) par une matrice pour obtenir une aube (100) en matériau composite ayant un renfort fibreux constitué par la préforme et densifié par la matrice, et formant une seule pièce avec pied d'aube intégré (130).

2. Procédé selon la revendication 1, **caractérisé en ce que** l'ébauche fibreuse (200) est tissée avec un deuxième ensemble (204) continu de couches de fils et la mise en forme de l'ébauche fibreuse comprend l'élimination par découpe de parties du deuxième ensemble (204) de couches de fils extérieures à la deuxième partie (230c) de l'ébauche fibreuse.

3. Procédé selon la revendication 2, **caractérisé en ce qu'**il comprend l'usinage de ladite deuxième partie à la forme du pied d'aube à réaliser.

4. Procédé selon l'une quelconque des revendications 1 à 3, **caractérisé en ce que** l'ébauche fibreuse (200) comprend en outre au moins une troisième partie (240c ; 250c) formant tout ou partie d'un des éléments suivants :
- plateforme d'aube avec ou sans becquets et avec ou sans muret anti-basculement,
- talon d'aube avec ou sans becquets de talon d'aube et avec ou sans léchettes de talon d'aube,
et **en ce que** la mise en forme de l'ébauche fibreuse comprend la mise en forme de la troisième partie (240c ; 250c) de l'ébauche fibreuse (200) pour obtenir une préforme fibreuse (300) en une seule pièce ayant en outre ladite troisième partie, l'aube (100) obtenue après densification de la préforme par une matrice formant une seule pièce avec pied d'aube intégré (130) et avec tout ou partie intégrée d'un élément des éléments suivants :
- plateforme d'aube (140) avec ou sans becquets et avec ou sans muret anti-basculement,
- talon d'aube (150) avec ou sans becquets de talon d'aube et avec ou sans léchettes de talon d'aube.

5. Procédé selon la revendication 4, **caractérisé en ce que** la troisième partie (240c ; 250c) est formée par ledit deuxième ensemble (204) de plusieurs couches de fils, le premier ensemble (202) de couches de fils étant traversé par des fils du deuxième ensemble de couches de fils au niveau de la troisième partie (240c ; 250c) de l'ébauche (200).

6. Procédé selon la revendication 4 ou 5, **caractérisé en ce que** l'ébauche fibreuse (200) est tissée avec le deuxième ensemble (204) continu de couches de fils et la mise en forme de l'ébauche fibreuse comprend l'élimination par découpe de parties du deuxième ensemble (204) de couches de fils extérieures à la troisième partie (240c ; 250c) de l'ébauche fibreuse (200).

7. Procédé selon l'une quelconque des revendications 4 à 6, **caractérisé en ce que** le nombre de couches de fils dans le deuxième ensemble (204) de couches de fils est plus important dans la deuxième partie (230c) de l'ébauche fibreuse que dans la troisième partie (240c ; 250c).

8. Procédé selon l'une quelconque des revendications 4 à 6, **caractérisé en ce que** le titre des fils dans le deuxième ensemble (240) de couches de fils est plus important dans la deuxième partie (230c) de l'ébauche fibreuse que dans la troisième partie (240c ; 250c).

9. Procédé selon la revendication 4, **caractérisé en ce que** la troisième partie correspond à une texture fibreuse rapportée sur la première partie de l'ébauche fibreuse.

10. Aube (100) de turbomachine en matériau composite comprenant un renfort fibreux obtenu par tissage multicouche de fils et densifié par une matrice,
**caractérisée en ce que** l'aube comprend une première partie constitutive de pale (120) formant une seule pièce avec au moins une deuxième partie constitutive d'un pied d'aube (130), les parties de renfort fibreux correspondant à la première et à la deuxième parties de l'aube (100) sont au moins en partie mutuellement imbriquées, avec des fils de la deuxième partie de renfort fibreux traversant la première partie de renfort fibreux.

11. Aube selon la revendication 10, **caractérisé en ce qu'**elle comprend en outre au moins une troisième partie formant tout ou partie d'un des éléments suivants :
- plateforme d'aube (140) avec ou sans becquets et avec ou sans muret anti-basculement,
- talon d'aube (150) avec ou sans becquets de talon d'aube et avec ou sans léchettes de talon d'aube.

12. Aube selon la revendication 11, caractérisé en ce les parties de renfort fibreux correspondant à la première et à la troisième partie de l'aube sont au moins en partie mutuellement imbriquées, avec des fils de la troisième partie de renfort fibreux pénétrant dans la deuxième partie de renfort fibreux.

13. Rotor équipée d'une ou plusieurs aubes selon l'une quelconque des revendications 10 à 12.

14. Compresseur équipé d'un rotor selon la revendication 13.

15. Turbomachine équipée d'un compresseur selon la revendication 14.

## Patentansprüche

1. Verfahren zur Herstellung einer Turbomaschinenschaufel (100) aus Verbundmaterial, umfassend eine matrixverdichtete Faserverstärkung, wobei das Verfahren umfasst:
- Herstellen eines einteiligen Faserrohlings (200) durch mehrschichtiges Weben, umfassend, in der Längsrichtung des Faserrohlings, die der Längsrichtung der herzustellenden Schaufel entspricht, einen ersten Satz (202) aus mehreren Schichten von Fasern, die miteinander verbunden sind, um einen ersten Abschnitt (202c) des Rohlings zu bilden, der einer Blattvorform (320) entspricht, und einen zweiten Satz (204) aus einer oder mehreren Schichten von Fasern, die zumindest lokal miteinander verbunden sind, um wenigstens einen zweiten Abschnitt (230c) des Rohlings (200) zu bilden, der einer Vorform eines Schaufelfußes (330) entspricht, wobei die Fasern des ersten Satzes (202) von Faserschichten nicht mit den Fasern des zweiten Satzes (204) von Faserschichten verbunden sind, und wobei der erste Satz von Faserschichten von Fasern des zweiten Satzes von Faserschichten am zweiten Abschnitt (230c) des Rohlings (200) durchquert wird,
- Formen des Faserrohlings (200), um eine einteilige faserige Vorform (300) zu erhalten, wobei der erste Abschnitt die Blattvorform (320) bildet und zumindest der zweite Abschnitt die Vorform des Schaufelfußes (330) bildet, und
- Verdichten der Vorform (300) durch eine Matrix, um eine Schaufel (100) aus Verbundmaterial zu erhalten, die eine Faserverstärkung aufweist, die aus der Vorform besteht und durch die Matrix verdichtet ist, und die ein einziges Stück mit integriertem Schaufelfuß (130) bildet.

2. Verfahren gemäß Anspruch 1, **dadurch gekennzeichnet, dass** der Faserrohling (200) mit einem zweiten kontinuierlichen Satz (204) von Faserschichten verwebt wird und das Formen des Faserrohlings das teilweise Herausschneiden des zweiten Satzes (204) von den äußeren Faserschichten im zweiten Abschnitt (230c) des Faserrohlings umfasst.

3. Verfahren gemäß Anspruch 2, **dadurch gekennzeichnet, dass** es die spanende Bearbeitung des zweiten Abschnitts in die Form des herzustellenden Schaufelfußes umfasst.

4. Verfahren gemäß einem der Ansprüche 1 bis 3, **dadurch gekennzeichnet, dass** der Faserrohling (200) weiterhin mindestens einen dritten Abschnitt (240c; 250c) umfasst, der ganz oder teilweise eines der folgenden Elemente bildet:
- eine Schaufelplattform mit oder ohne Hinterschnitt und mit oder ohne Kippschutzwand,
- einen Schaufelabsatz mit oder ohne Hinterschnitt des Schaufelabsatzes und mit oder ohne Zungen des Schaufelabsatzes,
und dass das Formen des Faserrohlings das Formen des dritten Abschnitts (240c; 250c) des Faserrohlings (200) umfasst, um eine faserige Vorform (300) in einem einzigen Stück zu erhalten, die ferner den dritten Abschnitt aufweist, wobei die nach Verdichtung der Vorform durch eine Matrix erhaltene Schaufel (100) ein einzelnes Stück mit einem integrierten Schaufelfuß (130) und mit einem der folgenden Elemente, ganz oder teilweise integriert, bildet:
- Schaufelplattform (140) mit oder ohne Hinterschnitt und mit oder ohne Kippschutzwand,
- Schaufelabsatz (150) mit oder ohne Hinterschnitt des Schaufelabsatzes und mit oder ohne Zungen des Schaufelabsatzes.

5. Verfahren gemäß Anspruch 4, **dadurch gekennzeichnet, dass** der dritte Abschnitt (240c; 250c) durch den zweiten Satz (204) von mehreren Faserschichten gebildet wird, wobei der erste Satz (202) von Faserschichten von Fasern des zweiten Satzes von Faserschichten am dritten Abschnitt (240c; 250c) des Rohlings (200) durchquert wird.

6. Verfahren gemäß Anspruch 4 oder 5, **dadurch gekennzeichnet, dass** der Faserrohling (200) mit dem zweiten kontinuierlichen Satz (204) von Faserschichten verwebt wird und das Formen des Faserrohlings das teilweise Herausschneiden des zweiten Satzes (204) von den äußeren Faserschichten im dritten Abschnitt (240c; 250c) des Faserrohlings (200) umfasst.

7. Verfahren gemäß einem der Ansprüche 4 bis 6, **dadurch gekennzeichnet, dass** die Anzahl der Faserschichten im zweiten Satz (204) von Faserschichten im zweiten Abschnitt (230c) des Faserrohlings größer ist als im dritten Abschnitt (240c; 250c).

8. Verfahren gemäß einem der Ansprüche 4 bis 6, **dadurch gekennzeichnet, dass** der Fasertiter im zweiten Satz (240) von Faserschichten im zweiten Abschnitt (230c) des Faserrohlings größer ist als im dritten Abschnitt (240c; 250c).

9. Verfahren gemäß Anspruch 4, **dadurch gekennzeichnet, dass** der dritte Abschnitt einer faserigen Textur entspricht, die auf den ersten Abschnitt des Faserrohlings aufgebracht ist.

10. Turbomaschinenschaufel (100) aus Verbundmaterial, umfassend eine Faserverstärkung, die durch mehrschichtiges Weben von Fasern erhalten und durch eine Matrix verdichtet wird,
**dadurch gekennzeichnet, dass** die Schaufel einen ersten das Blatt (120) bildenden Abschnitt umfasst, der ein einziges Stück mit mindestens einem zweiten den Schaufelfuß (130) bildenden Abschnitt bildet, wobei die Faserverstärkungsabschnitte, die dem ersten und zweiten Abschnitt der Schaufel (100) entsprechen, zumindest teilweise mit Fasern des zweiten Faserverstärkungsabschnitts, die den ersten Verstärkungsabschnitt durchqueren, ineinandergreifen.

11. Schaufel gemäß Anspruch 10, **dadurch gekennzeichnet, dass** sie ferner mindestens einen dritten Abschnitt umfasst, der ganz oder teilweise eines der folgenden Elemente bildet:
- eine Schaufelplattform (140) mit oder ohne Hinterschnitt und mit oder ohne Kippschutzwand,
- einen Schaufelabsatz (150) mit oder ohne Hinterschnitt des Schaufelabsatzes und mit oder ohne Zungen des Schaufelabsatzes.

12. Schaufel gemäß Anspruch 11, **dadurch gekennzeichnet, dass** die Faserverstärkungsabschnitte, die dem ersten und dritten Abschnitt der Schaufel entsprechen, zumindest teilweise mit Fasern des dritten Faserverstärkungsabschnitts, die in den zweiten Faserverstärkungsabschnitt eindringen, ineinandergreifen.

13. Rotor, der mit einer oder mehreren Schaufeln gemäß einem der Ansprüche 10 bis 12 ausgestattet ist.

14. Verdichter mit Rotor gemäß Anspruch 13.

15. Turbomaschine mit einem Verdichter gemäß Anspruch 14.

## Claims

1. A method of fabricating a turbine engine blade (100) out of composite material comprising fiber reinforcement densified by a matrix, the method comprising:
• making a fiber blank (200) by multilayer weaving a single piece comprising, in the longitudinal direction of said fiber blank corresponding to the longitudinal direction of the blade to be fabricated: a first set (202) of a plurality of yarn layers that are interlinked to form a first portion (202c) of the blank corresponding to an airfoil preform (320); and a second set (204) of one or more yarn layers that are interlinked at least locally to form at least a second portion (230c) of the blank (200) corresponding to a blade root preform (330); the yarns of the first set (202) of yarn layers not being interlinked with the yarns of the second set (204) of yarn layers, the first set of yarn layers having the yarns of the second set of yarn layers crossing therethrough in the second portion (230c) of the blank (200) ;
• shaping the fiber blank (200) to obtain a one-piece fiber preform (300) having said first portion forming an airfoil preform (320) and at least said second portion forming a blade root preform (330); and
• densifying the preform (300) with a matrix in order to obtain a composite material blade (100) having fiber reinforcement constituted by the preform and densified by the matrix, forming a single piece incorporating a blade root (130).

2. A method according to claim 1, **characterized in that** the fiber blank (200) is woven with a second continuous set (204) of yarn layers, and the shaping of the fiber blank comprises eliminating portions of the second set (204) of yarn layers outside the second portion (230c) of the fiber blank by cutting them off.

3. A method according to claim 2, **characterized in that** it includes machining said second portion to the shape of the blade root that is to be made.

4. A method according to any one of claims 1 to 3, **characterized in that** the fiber blank (200) also includes at least one third portion (240c; 250c) forming some or all of the following elements:
• an inner platform with or without overhangs and with or without an anti-tilting rim; and
• an outer platform with or without outer platform overhangs and with or without outer platform wipers; and
**in that** shaping the fiber blank comprises shaping the third portion (240c; 250d) of the fiber blank (200) to obtain a single piece fiber preform (300) also having said third portion, the blade (100) obtained after densification of the preform with a matrix forming a single piece that incorporates a blade root (130) and that incorporates some or all of an element selected from the following elements:
• an inner platform (140) with or without overhangs and with or without an anti-tilting rim; and
• an outer platform (150) with or without outer platform overhangs and with or without outer platform wipers.

5. A method according to claim 4, **characterized in that** the third portion (240c; 250c) is formed by said second set (204) of a plurality of yarn layers, the first set (202) of yarn layers having yarns of the second set of yarn layers crossing therethrough in the third portion (240c; 250c) of the blank (200).

6. A method according to claim 4 or claim 5, **characterized in that** the fiber blank (200) is woven with the continuous second set (204) of yarn layers, and the shaping of the fiber blade comprises eliminating portions of the second set (204) of yarn layers outside the third portion (240c; 250c) of the fiber blank (200), by cutting them off.

7. A method according to any one of claims 4 to 6, **characterized in that** the number of yarn layers in the second set (204) of yarn layers is greater in the second portion (230c) of the fiber blank than in the third portion (240c; 250c).

8. A method according to any one of claims 4 to 6, **characterized in that** the weight of the yarns in the second set (240) of yarn layers is greater in the second portion (230c) of the fiber blank than in the third portion (240c; 250c).

9. A method according to claim 4, **characterized in that** the third portion corresponds to a fiber texture fitted onto the first portion of the fiber blank.

10. A turbine engine blade (100) made of composite material comprising fiber reinforcement obtained by multilayer weaving of yarns and densified by a matrix; the blade being **characterized in that** it comprises a first portion constituting an airfoil (120) formed as a single piece with at least one second portion constituting a blade root (130), the fiber reinforcement portions corresponding to the first and second blade portions (100) being mutually interleaved, at least in part, with yarns of the second fiber reinforcement portion passing through the first fiber reinforcement portion.

11. A blade according to claim 10, **characterized in that** it further comprises at least one third portion forming some or all of the following elements:
• an inner platform (140) with or without overhangs and with or without an anti-tilting rim; and
• an outer platform (150) with or without outer platform overhangs and with or without outer platform wipers.

12. A blade according to claim 11, **characterized in that** the fiber reinforcement portions corresponding to the first and third portions of the blade are mutually interleaved, at least in part, with yarns of the first fiber reinforcement portion penetrating into the second fiber reinforcement portion.

13. A rotor having one or more blades according to any one of claims 10 to 12.

14. A compressor fitted with a rotor according to claim 13.

15. A turbine engine fitted with a compressor according to claim 14.
